# EUROPÄISCHE PATENTSCHRIFT

(11) **EP 2 560 772 B1**
(45) Veröffentlichungstag und Bekanntmachung des Hinweises auf die Patenterteilung: **05.06.2013**
(21) Anmeldenummer: 12706193.5
(22) Anmeldetag: 16.02.2012
(51) Int. Cl.: B21D 28/28, B21D 51/02, B23P 15/26, B21D 53/02

(54) **HERSTELLUNGSVERFAHREN FÜR SCHLITZE IN EINER ROHRWAND UND SCHLITZWERKZEUG**
METHOD FOR PRODUCING SLOTS IN A TUBE WALL AND SLOTTING TOOL
PROCÉDÉ DE RÉALISATION DE RAINURES DANS UNE PAROI TUBULAIRE ET OUTIL DE RAINURAGE

(30) Priorität: 05.03.2011 DE 102011013209
(43) Veröffentlichungstag der Anmeldung: 27.02.2013
(73) Patentinhaber: Modine Manufacturing Company, Racine, Wisconsin 53403-2552 (US)
(72) Erfinder: HIGELIN, Michael, 73054 Eislingen/Fils (DE); BORST, Daniel, 72649 Wolfschlugen (DE)
(74) Vertreter: Wolter, Klaus-Dietrich
(86) Internationale Anmeldenummer: PCT/EP2012/000681
(87) Internationale Veröffentlichungsnummer: WO 2012/119697

(56) Entgegenhaltungen:
- DE-A1-102006 028 490
- DE-C2- 4 334 203
- GB-A- 807 608
- US-A- 4 679 289
- US-A- 5 088 193

## Beschreibung

Die Erfindung betrifft ein Verfahren zur Herstellung von Schlitzen in einer Rohrwand sowie ein Schlitzwerkzeug, wobei eine Matrize in das Rohr geschoben wird und in einer Reihe angeordnete Stempel die Rohrwand von außen durchstechen und dabei die Schlitze erzeugen und mit weiteren Merkmalen gemäß Oberbegriff der Patentansprüche 1 bzw. 3.

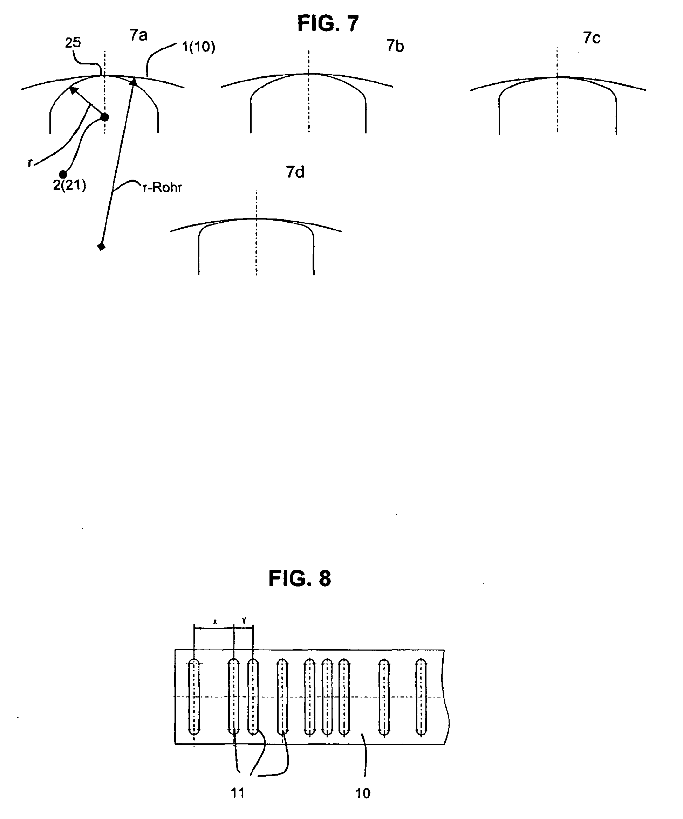

Ein Herstellungsverfahren der im Oberbegriff beschriebenen Art ist aus der DE 4 334 203 C2 bekannt. In diesem Patent gibt es Ausführungen mit zwei in das Rohr einzuführenden Matrizen, die gemeinsam den Rohrquerschnitt ausfüllen. Mehrere Matrizen einzusetzen ist aufwendig, sowohl in der Werkzeugherstellung als auch in der Herstellung der Schlitze. Andere Ausführungen in der genannten Schrift verwenden lediglich eine einzige Matrize, die ebenfalls den gesamten Rohrquerschnitt ausfüllt, was an sich vorteilhafter ist. Bei der Herstellung der Schlitze mittels einer einzigen Matrize ist vorgesehen, die Matrize nach der Ausbildung der Schlitze aus der Arbeitsstellung in eine Rückzugsstellung um 180° zu drehen, damit dieselbe wieder aus dem Rohr entfernt werden kann. Große Verdrehwege zu realisieren kann sich jedoch nachteilig auf die Wirtschaftlichkeit des Fertigungsprozesses auswirken, da längere Taktzeiten notwendig sein könnten. Um ausreichend große Kragen an den Schlitzrändern realisieren zu können, besitzt die Matrize zwischen ihren axial angeordneten Stützabschnitten relativ schwach ausgebildete axiale Verbindungsabschnitte. (Verbindungsabschnitte - siehe in der DE'203 C2, Fig. 7, Bezugszeichen 4) Es kann deshalb zu Brüchen in der Matrize kommen. Darüber hinaus werden in der Veröffentlichung ausschließlich runde Rohre gezeigt. Es ist jedoch erwünscht, Rohre mit möglichst unterschiedlichen Querschnittsformen mit den Schlitzen versehen zu können. Auf das Schlitzen runder Rohre und den Einsatz einer einzigen inneren Matrize bezieht sich auch die US 5 088 193 A. Gemäß dieser Veröffentlichung ist vorgesehen, zunächst Einprägungen in der Rohrwand mit Hilfe eines bogenförmigen, der Rohrkontur entsprechenden Stempels auszubilden. Im Rohr befindet sich eine Matrize, deren Querschnitt nur geringfügig kleiner ist als der innere Rohrquerschnitt. Anschließend wird die Matrize aus dem Rohr entfernt und in den im ersten Schritt erzeugten Einprägungen werden die Schlitze mit Hilfe eines Steckwerkzeuges hergestellt. Eine Drehbewegung der Matrize ist hier nicht erforderlich, da dieselbe als durchgehender runder Stab, das heißt, ohne Stütz - und Verbindungsabschnitte, ausgebildet ist. Es kann trotzdem zumindest bezüglich der Wirtschaftlichkeit des Fertigungsprozesses ein Nachteil geltend gemacht werden.

Bei der Herstellung von Schlitzen, wie vorstehend beschrieben, fällt grundsätzlich kein Ausschnitt als Abfall an, wodurch sich diese Verfahren von anderen bekannten Verfahren unterscheiden, bei denen Löcher ausgeschnitten und die Lochränder flanschartig umgelegt werden.

Mit der nachfolgend beschriebenen, auf die Herstellung von Schlitzen gerichteten Erfindung werden auch jene bekannten Verfahren nicht angesprochen, bei denen das Rohr innen mit einem inkompressiblen Medium (Flüssigkeit) beaufschlagt wird, um die Rohrschlitze zu erzeugen.

Die Aufgabe der Erfindung besteht in der Bereitstellung eines Herstellungsverfahrens und eines geeigneten Schlitzwerkzeuges, welches eine etwas wirtschaftlichere Herstellung von Schlitzen in Rohren mit verschiedenen Querschnittsformen verspricht. Die Aufgabenlösung erfolgt erfindungsgemäß mit einem Herstellungsverfahren gemäß Patentanspruch 1 und mit einem Schlitzwerkzeug gemäß Patentanspruch 3. Das Verfahren zur Herstellung von Schlitzen in einer Rohrwand, wobei eine Matrize in das Rohr geschoben wird und in einer Reihe angeordnete Stempel die Rohrwand von außen durchstechen und dabei die Schlitze erzeugen, worauf die Matrize aus einer Arbeitsstellung um ihre Längsachse in eine Rückzugsstellung gedreht und aus dem Rohr gezogen wird, sieht erfindungsgemäß vor, dass die Rohrwand während des Schlitzvorganges von außen umfasst und gehalten sowie von innen ausschließlich an zwei gegenüberliegenden Abstützstreifen mit der Matrize in der Arbeitsstellung der Matrize stabilisiert wird.

Das Schlitzwerkzeug, mit einer Reihe von Stempeln zur Herstellung von Schlitzen in einer Rohrwand und mit einer in das Rohr einführbaren, mit Einkerbungen versehenen Matrize, die um ihre Längsachse (Axialachse) zwischen einer Arbeitsstellung und einer Rückzugsstellung drehbar ist, ist erfindungsgemäß dadurch gekennzeichnet, dass ein Stützwerkzeug zur Abstützung des Rohres von außen angeordnet ist, das um den Umfang des Rohres greift, dass die Matrize, in Querschnittsrichtung (also in Radialrichtung) gesehen, zwei gegenüberliegende Schmalseiten an den Enden ihrer größten Querschnittserstreckung aufweist, wobei die Matrize in der Arbeitsstellung zwei gegenüberliegende, in Axialrichtung laufende Abstützstreifen zwischen den Schmalseiten und der Innenseite der Rohrwand aufweist bzw. bereitstellt.

Der Querschnitt der Matrize einer ersten Ausführungsform unterscheidet sich durch abgerundete oder angespitzte oder konisch ausgebildete Schmalseiten von einem etwa rechteckigen Querschnitt. Die Formulierung soll auch Querschnittsformen umfassen, die identisch oder ähnlich einem Oval sind und auch solche Formen, die ähnlich oder identisch einer Raute (Rhombus) sind sowie weitere Abwandlungen, die alle an den beiden Enden der größten Querschnittserstreckung je eine Schmalseite aufweisen.

Eine solche Ausbildung gestattet kleinere oder kürzere Drehbewegungen der Matrize, nämlich maximal etwa 120°, vorzugsweise etwa 70 - 90°. Deshalb können kürzere Taktzeiten bzw. ein verbesserte Produktivität bei der Herstellung der Schlitze erwartet werden.

Unter dem hauptsächlich funktionell zu verstehenden Begriff "Abstützstreifen" kann im Sinne dieses Vorschlags auch ein Kontaktstreifen gemeint sein, der die Drehung der Matrize um die Längsachse jedoch nicht erschwert. Darunter ist ferner eine solche Abstützung zu verstehen, die die Stabilisatorwirkung der Matrize auf das Rohr gewährleistet, sodass die Rohrform, abgesehen von kleinen zulässigen Abweichungen, erhalten bleibt. Demzufolge wird das Maß der größten Querschnittserstreckung der Matrize geringfügig kleiner sein als das entsprechende Innenmaß des Rohres. Der Fachmann wird die zulässigen Toleranzen der Rohre berücksichtigen und die Matrize dementsprechend bereitstellen.

Bei Rohren mit zum Beispiel etwa D - förmigem oder etwa rechteckigem Querschnitt ist vorgesehen, dass ansonsten - das heißt, im Zuge der Drehbewegung der Matrize - die Innenseite der Rohrwand nicht berührt ist.

Dagegen ist bei etwa runden Rohren vorgesehen, dass die Matrize auch in der Rückzugsstellung zwei gegenüberliegende Abstützstreifen mit der Innenseite der Rohrwand besitzt, die um nicht mehr als etwa 120° zu der Position der Abstützstreifen in der Arbeitsstellung versetzt sind.

Im Zusammenhang mit den abgerundeten Schmalseiten ist vorgesehen, dass der Radius der Abrundungen kleiner ist als der Krümmungsradius des Rohres im Bereich der Schlitze. Dadurch wandeln sich die etwas breiteren Abstützstreifen in schmale Abstützlinien um, die eine in Axialrichtung laufende linienartige Abstützung der Rohrwand etwa in der Mitte der Schmalseiten darstellen.

Ein den vorstehend beschriebenen Gegenstand weiter präzisierendes Merkmal besteht darin, dass die Matrize in der Arbeitsstellung mit ihrer größten Querschnittserstreckung etwa quer zu den herzustellenden Schlitzen steht.

Es ist vorgesehen, dass die Einkerbungen in der Matrize nicht tiefer als etwa bis zur Hälfte des Maßes der größten Querschnittserstreckung der Matrize, in Radialrichtung gesehen, reichen. Damit wird bewirkt, dass die Bruchgefahr der Matrize vergleichsweise reduziert wird.

Es ist ferner vorgesehen, dass außer der Drehbewegung um die Längsachse (Axialachse) der Matrize wenigstens eine zusätzliche Bewegung der Matrize ausführbar ist. Bezüglich der zusätzlichen Bewegung ist vorgesehen, dass es sich um eine Senk - und Hebebewegung handelt. Diese Weiterentwicklungen zielen darauf, noch mehr unterschiedliche Querschnittsformen des Rohres mit Schlitzen versehen zu können. Aber auch darauf, etwas längere Kragen an den Schlitzen bzw. an den Schlitzrändern ausbilden zu können.

Die Erfindung wird nachfolgend in Ausführungsbeispielen anhand der beigefügten Zeichnungen beschrieben.

### Figurenkurzbeschreibung

Die Fig. 1 zeigt die Situation kurz vor dem Schlitzvorgang.

Die Fig. 2 zeigt die Situation beim Schlitzvorgang.

Die Fig. 3 zeigt ist ähnlich der Fig. 2 - aber ohne Stempel gezeichnet.

Die Fig. 4 zeigt die Situation nach der Drehbewegung der Matrize in die Rückzugsstellung.

Die Fig. 5 zeigt eine Situation nach Ausführung einer Senkbewegung der Matrize. Die Fig. 6 zeigt verschiedene Rohrquerschnitte und Matrizenformen.

Die Fig. 7 zeigt Skizzen verschiedener Schmalseitengestaltungen.

Die Fig. 8 zeigt eine skizzenhafte Ansicht auf eine Reihe von hergestellten Schlitzen. Die Fig. 9 zeigt ein Sammelrohr eines Wärmetauschers mit einer Trennwand im Sammelrohr.

Die Rohre **1** können beispielsweise aus einer Aluminiumlegierung hergestellt sein. Die Herstellung kann beispielsweise durch Extrudieren, Strangpressen oder durch Rohrformen aus Blechplatten und Schweißen einer Längsnaht erfolgen.

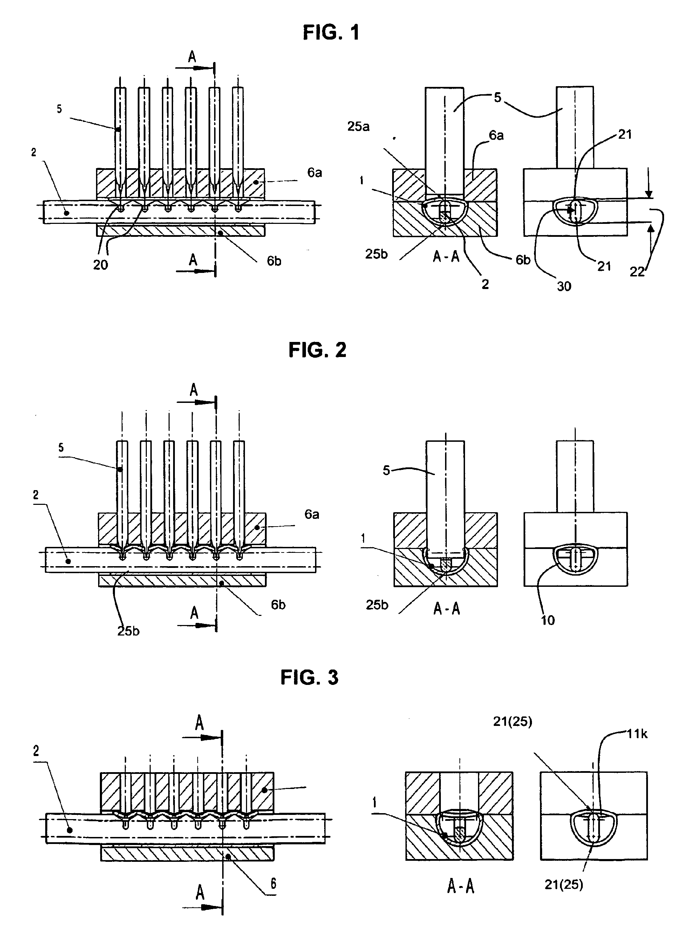

Die Fig. 1 bis 5 zeigen jeweils einen Längsschnitt, den Schnitt A -A und eine Seitenansicht des Schlitzwerkzeuges. Das Schlitzwerkzeug umfasst eine Reihe (gezeigt sind sechs Stück) von Stempel **5,** ein Abstützwerkzeug **6,** das in den Ausführungsbespielen aus einem Oberwerkzeug **6a** und einem Unterwerkzeug **6b** besteht und eine Matrize **2,** die in das Rohr **1** eingeschoben wurde. Das Abstützwerkzeug **6** könnte auch einteilig ausgebildet sein, mit einem Querschnitt, der dem Rohrquerschnitt entspricht, sodass das Rohr **1** darin eingeschoben, gehalten und gestützt werden kann. Die Rohrform ist annähernd D - förmig, wobei die Vertikale des D geringfügig nach außen gewölbt ist. Die Schlitze **11** werden in diese gewölbte "Vertikale" eingearbeitet. Wie in den Längsschnitten der Fig. 1 bis 3 dargestellt, wurde die Matrize **2** in äquidistanten Abständen, die den Abständen der einzubringenden Schlitze **11** entsprechen müssen, mit Einkerbungen **20** versehen.

Die Fig. 8 zeigt allerdings, dass die Abstände der Schlitze **11** auch zweckentsprechend festgelegt werden können, das heißt, sie müssen nicht stets das gleiche Maß haben. Die Schlitze **11** müssen auch nicht die gleiche Form und Größe haben, auch wenn in der Fig. 8 nur identische Schlitze **11** gezeigt werden.

In den Fig. 1 bis 3 befindet sich die Matrize **2** jeweils in der Arbeitsstellung, in der Zeichnung eine vertikale Stellung, in der die Schlitze **11** hergestellt werden. Zunächst werden Oberwerkzeug **6a** und Unterwerkzeug **6b** zusammengefahren, sodass das Rohr **1** allseitig von außen umfasst und gehalten wird. Zur Herstellung der Schlitze **11** werden dann die Stempel 5 durch nicht gezeigte Führungen im Oberwerkzeug **6a** hindurch nach unten bewegt und durchstechen mit ihrer speziellen Spitzenausbildung die Rohrwand **10**, wie in der Fig. 2 gezeigt wird. Dabei wird jeder Schlitz **11** mit einem nach innen weisenden, aufgerichteten Kragen **11k** versehen, der in den Fig. 3 bis 5 erkennbar ist.

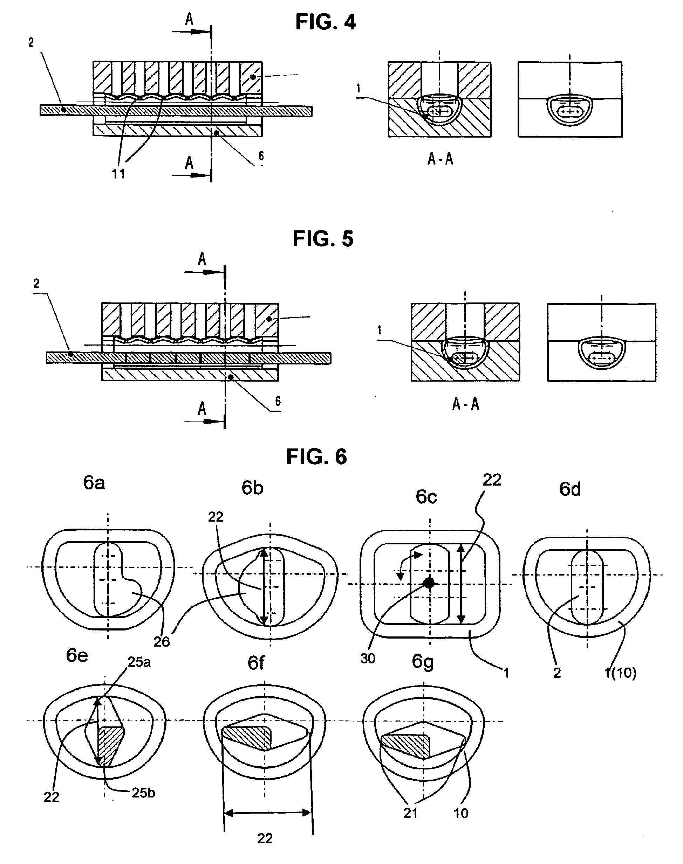

In den Fig. 4 bis 5 ist die Rückzugsstellung zu sehen, in der Zeichnung eine horizontale Lage der größten Querschnittserstreckung **22** der Matrize **2,** in der die Schlitze **11** bereits ausgebildet sind und die Matrize **2** aus dem Rohr **1** herausgezogen werden kann.

Wie aus den Seitenansichten und aus den Schnitten ersichtlich ist, hat die Matrize **2** in den Fig. 1 bis 5 und in Fig. 6c einen dem Rechteck ähnlichen Querschnitt, dessen Schmalseiten **21** allerdings abgerundet sind. Die hier angesprochenen verschiedenen Querschnittsformen der Matrize **2** zeichnen sich dadurch aus, dass sie die erwähnte einzige größte Querschnittserstreckung **22** aufweisen, die beim Betrachten der Abbildungen sofort ins Auge fällt. In den Fig. 1 und 6 wurde das entsprechende Bezugszeichen **22** angegeben. Im Übrigen gelten die Bezugszeichen in Fig. 1 auch für die anderen Figuren entsprechend, soweit diese dort nicht vorhanden sind. An den beiden gegenüberliegenden Enden der größten Querschnittserstreckung **22** befindet sich je eine Schmalseite **21** der Matrize **2**. Die beiden Schmalseiten **21** besorgen die Stabilisierung der Rohrwand **10** von innen, denn sie stellen zwei gegenüberliegende Abstützstreifen **25** zur Verfügung, die sich axial über die Rohrlänge erstrecken. Die bereits angesprochenen Einkerbungen **20** führen dazu, dass der in der Zeichnung obere Abstützstreifen **25a** entsprechend unterbrochen ist, wohingegen der untere Abstützstreifen **25b** sich vom Rohranfang bis zum Rohrende durchgehend erstrecken kann. Weitere innere Abstützungen des Rohres **1** werden nicht vorgenommen.

Ein deutliches Unterscheidungsmerkmal zum einleitend beschriebenen Stand der Technik besteht ferner darin, dass der Querschnitt des Rohres **1** von dem Querschnitt der einzigen Matrize **2** vorzugsweise zu weniger oder nicht wesentlich mehr als zu etwa 50% ausgefüllt wird, wie die Figuren zeigen können. In der DE 4 334 203 C2 und in der US 5 088 193 A wird der gesamte bzw. nahezu der gesamte Rohrquerschnitt von der Matrize **2** ausgefüllt.

Der in den Längsschnitten und in den Querschnitten der Fig. 1 bis 5 dargestellte schraffierte Teil der Matrize **2** zeigt, dass die Einkerbungen **20** nicht wesentlich weiter als bis zur Hälfte der größten Querschnittserstreckung **22** der Matrize **2** in dieselbe hineinreichen. Daraus ist dann auch erkennbar, dass die Matrize **2**, trotz ihrer reduzierten Rohrquerschnittsausfüllung, stabiler ist als diejenigen aus dem Stand der Technik und demnach nicht so leicht brechen wird. Es war nicht zu erwarten, dass mit einem vergleichsweise deutlich reduzierten Matrizenquerschnitt eine bessere Stabilität erreicht werden kann.

Die Erfinder haben erkannt, dass die Abstützstreifen **25** deutlich schmaler gestaltet werden können, da Versuche gezeigt haben, dass die Abstützwirkung ausreichend erhalten bleibt. Breitere Abstützstreifen **25** könnten die Beweglichkeit der Matrize **2** im Rohr **1** beeinträchtigen. Deshalb schlagen sie ferner vor, die Abrundungen an den Schmalseiten **21** der Matrize **2** mit einem deutlich kleineren Radius **r** zu versehen als den Krümmungsradius der Rohrwand **10**. Dadurch ergeben sich relativ schmale Abstützstreifen **25**, die als Abstützlinien **25** bezeichnet werden können, da sie nur noch eine punkt - bzw. linienförmige Berührung der Rohrwand **10** von innen bereitstellen. Dementsprechend zeigt die vergrößerte Darstellung der einen Schmalseite **21** der Matrize **2** mit einem Ausschnitt der Rohrwand **10** in Fig. 7, dass die Abbildung 7a mit dem größten Radiusunterschied die schmalsten Abstützstreifen **25** aufweist. Vorzugsweise sind beide Schmalseiten **21** bzw. die zugehörigen Abstützstreifen bzw. Abstützlinien **25** identisch ausgebildet. Das Vorsehen von Abstützlinien **25** trägt dazu bei, kleinere Drehwinkelbewegungen der Matrize **2** zu realisieren (siehe unten). Zurück zu den Fig. 4 und 5, in denen, wie erwähnt, die Lage der Matrize **2** in der Rückzugsstellung zu sehen ist. Der Vergleich dieser beiden Figuren lässt erkennen, dass in der Fig. 5 eine zusätzliche Absenkbewegung der Matrize **2** ausgeführt wurde. Die Absenkung ist auch beim Vergleich der Fig. 6f und 6g ersichtlich (siehe unten). Diese Maßnahme bietet sich an, um weitere Querschnittsformen des Rohres **1** vorschlagsgemäß mit Schlitzen **11** versehen zu können.

Mögliche beispielhafte Querschnittsformen der Rohre 1 und der Matrize **2** werden in den Darstellungen gemäß Fig. 6 gezeigt. Zu sehen sind D - förmige und dieser Form ähnliche Rohre **1** sowie ein etwa rechteckiges Rohr **1**. Das in der Fig. 6 nicht gezeigte Stützwerkzeug **6** sollte an die jeweilige Querschnittsform des Rohres **1** angepasst sein. Die Fig. 6a und 6b zeigen, dass es leicht möglich ist, beispielsweise durch eine Ausbauchung **26** des in der Skizze unteren Teils der Matrize **2** (Fig. 6a) die bereits angesprochene Stabilität derselben noch weiter zu verbessern. In Fig. 6b ist dagegen eine zentrisch liegende seitliche Ausbauchung **26** vorgesehen worden. Die größte Querschnittserstreckung **22** ist in den Fig. 6a bis 6e in vertikaler Richtung angeordnet, also in der Arbeitsstellung der Matrize **2** liegend. In den Fig. 6f und 6g ist die Rückzugsstellung zu sehen, in der die Matrize aus dem Rohr **1** gezogen werden kann, wobei in Fig. 6g auch die erwähnte Absenkung der Matrize **2** vorgenommen wurde. In der abgesenkten Stellung können die beiden Schmalseiten **21** die Rohrwand durchaus leicht berühren, ohne das Herausziehen der Matrize **2** zu erschweren. Auch beim nicht gezeigten Schlitzen etwa runder Rohre **1** ist eine solche leichte Berührung vorhanden. In den Fig. 6e bis 6g sind etwa rautenförmige Querschnitte der Matrize **2** ersichtlich. Die oben angesprochenen Maße der Radien **r** weisen hier die größte Differenz auf, sodass sehr schmale Abstützlinien **25** vorhanden sind.

Die Bewegung der Matrize **2** von der Arbeitsstellung in die Rückzugsstellung und zurück erfolgt durch eine hin - und hergehende Drehbewegung um die Längsachse **30**, die in Fig. 6c markiert wurde und dort etwa 90° beträgt. Der maximale Drehwinkel beträgt etwa 120°. Je nach Ausbildung der Kragen **11k** bzw. der Schlitze **11** und auch in Abhängigkeit von der Ausbildung der Matrize **2** mit den zwei Abstützlinien **25** sind Drehwinkel von beispielsweise 70 - 90° ausführbar und besonders vorteilhaft. Die vorschlagsgemäß hergestellten Schlitze **11** sind geeignet, beispielsweise nicht gezeigte Flachrohrenden in sich aufzunehmen, die darin eingeschweißt, eingelötet oder anderweitig befestigt werden können. Es kann sich bei dem Rohr **1** um ein Sammelrohr und bei den Flachrohren um Rohre eines Wärmetauschers handeln.

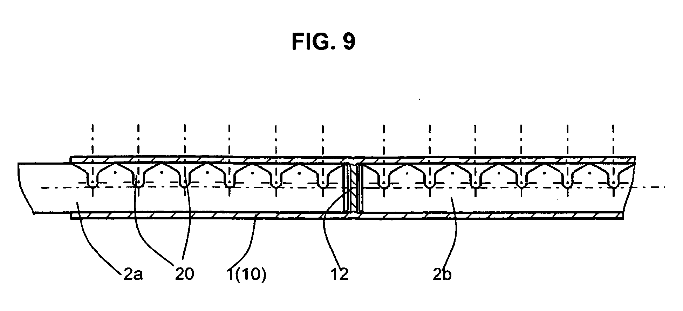

In der Fig. 9 wird ein solches Sammelrohr **1** gezeigt. In dieses Sammelrohr **1** wurde eine Trennwand **12** eingesetzt und innen an der Rohrwand **10** befestigt. In diesem speziellen Fall werden deshalb zwei der beschriebenen Matrizen **2a, 2b** in das Sammelrohr **1** geschoben, eine von der linken Seite und die andere von der rechten Seite des Rohres **1**, die jeweils bis dicht an die Trennwand **12** heranreichen. Danach werden - wie oben beschrieben - die Schlitze **11** in der Rohrwand **10** ausgebildet. Die Matrizen **2a, 2b** werden dann um etwa 90° um die Längsachse **30** gedreht und aus dem Sammelrohr **1** gezogen.

Die oben erwähnten Einkerbungen **20** in der Matrize **2** haben einen oberen konischen und einen sich daran anschließenden, etwa parallel laufenden unteren Abschnitt, die mit der Spitzenausbildung der Stempel **5** korrespondieren. Dementsprechend bildet sich in der Rohrwand **10** zwischen den Schlitzen **11** jeweils eine Gestalt ähnlich einem Spitzdach aus, wie es auch aus den Fig. 2 - 5 erkennbar ist. Diese Formgestaltung sorgt für eine hohe Steifigkeit und Stabilität in der Rohrwand **10**.

## Patentansprüche

1. Verfahren zur Herstellung von Schlitzen (11) in einer Rohrwand (10), wobei eine mit Einkerbungen (20) versehene Matrize (2) in das Rohr (1) geschoben wird und in einer Reihe angeordnete Stempel (5) die Rohrwand von außen durchstechen und dabei die Schlitze (10) erzeugen, worauf die Matrize (2) aus einer Arbeitsstellung um ihre Längsachse (30) in eine Rückzugsstellung gedreht und aus dem Rohr (1) gezogen wird, **dadurch gekennzeichnet, dass** die Rohrwand (10) während des Schlitzvorganges von außen umfasst und gehalten sowie von innen an zwei gegenüberliegenden Abstützstreifen (25) der Matrize (2) stabilisiert wird.

2. Verfahren nach Anspruch 1, **dadurch gekennzeichnet, dass** die Matrize (2) um maximal etwa 120°, vorzugsweise etwa um 70 bis 90°, gedreht wird, um sie aus dem Rohr (1) zu ziehen.

3. Schlitzwerkzeug mit einer Reihe von Stempeln (5) zur Herstellung von Schlitzen (11) in einer Rohrwand (10), und mit einer in das Rohr (1) einführbaren, mit Einkerbungen (20) versehenen Matrize (2), die um ihre Längsachse (30) zwischen einer Arbeitsstellung und einer Rückzugsstellung drehbar ist, **dadurch gekennzeichnet, dass** ein Stützwerkzeug (6) um den Umfang des Rohres (1) greift und dass die Matrize (2), in Querschnittsrichtung (Radialrichtung) gesehen, zwei Schmalseiten (21) aufweist, die an gegenüberliegenden Enden einer größten Querschnittserstreckung (22) der Matrize (2) angeordnet sind, wobei die Matrize (2) zwei sich axial erstreckende Abstützstreifen (25) zwischen den Schmalseiten (21) und der Innenseite der Rohrwand (10) ausbildet.

4. Schlitzwerkzeug nach Anspruch 3, **dadurch gekennzeichnet, dass** die Rohrwand (10) von der Matrize (2) ansonsten (in der Rückzugsstellung) nicht abgestützt wird, wobei das Rohr einen einseitig abgeflachten Querschnitt aufweist, derart, dass eine vertikale Rohrachse kleiner als eine horizontale Rohrachse ist, wobei die Schlitze (11) im Bereich der Abflachung angeordnet sind.

5. Schlitzwerkzeug nach Anspruch 3, **dadurch gekennzeichnet, dass** die zwei gegenüberliegenden Abstützstreifen (25) der Matrize (2) in der Rückzugsstellung um nicht mehr als 120°, vorzugsweise um 70 bis 90°, versetzt zur Arbeitsstellung angeordnet sind und die Rohrwand ebenfalls abstützen, wobei das Rohr (1) einen etwa runden Querschnitt aufweist.

6. Schlitzwerkzeug nach den Ansprüchen 3 bis 5, **dadurch gekennzeichnet, dass** der eine Abstützstreifen (25b) sich im Wesentlichen ohne Unterbrechung in Axialrichtung erstreckt und der andere axial sich erstreckende Abstützstreifen (25a) die Einkerbungen (20) aufweist.

7. Schlitzwerkzeug nach den Ansprüchen 3 bis 6, **dadurch gekennzeichnet, dass** die Schmalseiten (21) eine Abrundung aufweisen, deren Radius kleiner ist als der Krümmungsradius des Rohres (1) im Bereich der Schlitze (11), wobei die Abstützstreifen (25) zu Abstützlinien reduziert sind.

8. Schlitzwerkzeug nach Anspruch 7, **dadurch gekennzeichnet, dass** sich die Abstützlinien etwa entlang der Mitte der beiden Schmalseiten (21) erstrecken.

9. Schlitzwerkzeug nach den Ansprüchen 3 bis 8, **dadurch gekennzeichnet, dass** die Matrize (2) in der Arbeitsstellung mit ihrer größten Querschnittserstreckung (22) etwa quer zu den erzeugten Schlitzen (11) steht.

10. Schlitzwerkzeug nach einem der vorstehenden Ansprüche, **dadurch gekennzeichnet, dass** die Einkerbungen (20) in der Matrize (2) nicht wesentlich tiefer als etwa zur Hälfte der größten Querschnittserstreckung (22) der Matrize (2) reichen.

11. Schlitzwerkzeug nach einem der vorstehenden Ansprüche, **dadurch gekennzeichnet, dass** der Querschnitt des Rohres (1) vorzugsweise zu weniger oder nicht wesentlich mehr als etwa zu 50% vom Querschnitt der Matrize (2) ausgefüllt ist.

12. Schlitzwerkzeug nach einem der vorstehenden Ansprüche, **dadurch gekennzeichnet, dass** außer der Drehbewegung um die Längsachse (30) der Matrize (2) wenigstens eine zusätzliche Bewegung der Matrize (2) im Rohr ausführbar ist.

13. Schlitzwerkzeug nach Anspruch 12, **dadurch gekennzeichnet, dass** die zusätzliche Bewegung eine Senkbewegung ist.

## Claims

1. Method for producing slots (11) in a pipe wall (10), wherein a die (2) provided with notches (20) is pushed into the pipe (1) and punches (5) arranged in a row pierce the pipe wall from the outside and in the process create the slots (10), whereupon the die (2) is rotated about its longitudinal axis (30) from a working position into a retracted position and is pulled out of the pipe (1), **characterized in that** the pipe wall (10) is clasped from the outside and held during the slotting operation and is stabilized from the inside against two opposite supporting strips (25) of the die (2).

2. Method according to Claim 1, **characterized in that** the die (2) is rotated through at most about 120°, preferably through about 70 to 90°, in order to pull it out of the pipe (1).

3. Slotting tool having a row of punches (5) for producing slots (11) in a pipe wall (10), and having a die (2) which is introducible into the pipe (1), is provided with notches (20) and is rotatable about its longitudinal axis (30) between a working position and a retracted position, **characterized in that** a support tool (6) engages around the periphery of the pipe (1), and **in that** the die (2), as seen the cross-sectional direction (radial direction), has two narrow sides (21) which are arranged at opposite ends of the largest cross-sectional extent (22) of the die (2), wherein the die (2) forms two axially extending supporting strips (25) between the narrow sides (21) and the inner side of the pipe wall (10).

4. Slotting tool according to Claim 3, **characterized in that** the pipe wall (10) is otherwise (in the retracted position) not supported by the die (2), wherein the pipe has a cross section which is flattened on one side such that a vertical pipe axis is smaller than a horizontal pipe axis, wherein the slots (11) are arranged in the region of the flattened portion.

5. Slotting tool according to Claim 3, **characterized in that**, in the retracted position, the two opposite supporting strips (25) of the die (2) are arranged in a manner offset through no more than 120°, preferably through 70 to 90°, with respect to the working position, and likewise support the pipe wall, wherein the pipe (1) has an approximately round cross section.

6. Slotting tool according to Claims 3 to 5, **characterized in that** one supporting strip (25b) extends substantially without an interruption in the axial direction and the other axially extending supporting strip (25a) has the notches (20).

7. Slotting tool according to Claims 3 to 6, **characterized in that** the narrow sides (21) have a rounded portion, the radius of which is smaller than the radius of curvature of the pipe (1) in the region of the slots (11), wherein the supporting strips (25) have been reduced to supporting lines.

8. Slotting tool according to Claim 7, **characterized in that** the supporting lines extend approximately along the middle of the two narrow sides (21).

9. Slotting tool according to Claims 3 to 8, **characterized in that**, in the working position, the largest cross-sectional extent (22) of the die (2) is arranged approximately transversely to the produced slots (11).

10. Slotting tool according to one of the preceding claims, **characterized in that** the notches (20) in the die (2) are not substantially deeper than approximately half the greatest cross-sectional extent (22) of the die (2).

11. Slotting tool according to one of the preceding claims, **characterized in that** preferably less than or not substantially more than about 50% of the cross section of the pipe (1) is filled with the cross section of the die (2).

12. Slotting tool according to one of the preceding claims, **characterized in that**, in addition to the rotary movement about the longitudinal axis (30) of the die (2), at least one additional movement of the die (2) in the pipe can be carried out.

13. Slotting tool according to Claim 12, **characterized in that** the additional movement is a lowering movement.

## Revendications

1. Procédé de réalisation de rainures (11) dans une paroi tubulaire (10), une matrice (2) pourvue d'encoches (20) étant enfoncée dans le tube (1) et des poinçons (5) disposés en rangée traversant la paroi tubulaire depuis l'extérieur et produisant de ce fait les rainures (10), la matrice (2) étant ensuite tournée d'une position de travail autour de son axe longitudinal (30) dans une position de retrait et étant retirée du tube (1), **caractérisé en ce que** la paroi tubulaire (10) est entourée et maintenue de l'extérieur pendant l'opération de rainurage et est stabilisée de l'intérieur contre deux bandes d'appui opposées (25) de la matrice (2).

2. Procédé selon la revendication 1, **caractérisé en ce que** la matrice (2) est tournée d'un angle maximum d'environ 120°, de préférence d'environ 70 à 90° afin de la ressortir du tube (1).

3. Outil de rainurage comprenant une rangée de poinçons (5) pour la réalisation de rainures (11) dans une paroi tubulaire (10) et comprenant une matrice (2) pouvant être introduite dans le tube (1) et pourvue d'encoches (20), laquelle matrice peut tourner autour de son axe longitudinal (30) entre une position de travail et une position de retrait, **caractérisé en ce qu'**un outil de support (6) vient en prise autour de la périphérie du tube (1) et **en ce que** la matrice (2), vue dans la direction en coupe transversale (direction radiale), présente deux côtés étroits (21) qui sont disposés à des extrémités opposées d'une plus grande étendue en coupe transversale (22) de la matrice (2), la matrice (2) constituant deux bandes d'appui (25) s'étendant axialement entre les côtés étroits (21) et le côté intérieur de la paroi tubulaire (10).

4. Outil de rainurage selon la revendication 3, **caractérisé en ce que** la paroi tubulaire (10) n'est par ailleurs pas supportée par la matrice (2) (dans la position de retrait), le tube présentant une section transversale aplatie d'un côté, de telle sorte qu'un axe vertical du tube soit inférieur à un axe horizontal du tube, les rainures (11) étant disposées dans la région de l'aplatissement.

5. Outil de rainurage selon la revendication 3, **caractérisé en ce que** les deux bandes d'appui (25) opposées de la matrice (2) sont disposées dans la position de retrait de manière décalée par rapport à la position de travail d'un angle ne dépassant pas 120°, de préférence de 70 à 90° et supportent également la paroi tubulaire, le tube (1) présentant une section transversale approximativement ronde.

6. Outil de rainurage selon les revendications 3 à 5, **caractérisé en ce que** l'une des bandes d'appui (25b) s'étend dans la direction axiale essentiellement sans interruption et l'autre bande d'appui (25a) s'étendant axialement présente les encoches (20).

7. Outil de rainurage selon les revendications 3 à 6, **caractérisé en ce que** les côtés étroits (21) présentent un arrondi dont le rayon est inférieur au rayon de courbure du tube (1) dans la région des rainures (11), les bandes d'appui (25) étant réduites à des lignes d'appui.

8. Outil de rainurage selon la revendication 7, **caractérisé en ce que** les lignes d'appui s'étendent approximativement le long du centre des deux côtés étroits (21).

9. Outil de rainurage selon les revendications 3 à 8, **caractérisé en ce que** la plus grande étendue en section transversale (22) de la matrice (2) dans la position de travail est approximativement transversale aux rainures produites (11).

10. Outil de rainurage selon l'une quelconque des revendications précédentes, **caractérisé en ce que** les encoches (20) dans la matrice (2) ne s'étendent pas sensiblement plus profondément que jusqu'à approximativement la moitié de la plus grande étendue en section transversale (22) de la matrice (2).

11. Outil de rainurage selon l'une quelconque des revendications précédentes, **caractérisé en ce que** la section transversale du tube (1) est remplie de préférence à raison de moins de, ou de sensiblement pas plus d'environ 50 % de la section transversale de la matrice (2).

12. Outil de rainurage selon l'une quelconque des revendications précédentes, **caractérisé en ce qu'**en plus du mouvement de rotation autour de l'axe longitudinal (30) de la matrice (2), au moins un mouvement supplémentaire de la matrice (2) dans le tube peut en outre être effectué.

13. Outil de rainurage selon la revendication 12, **caractérisé en ce que** le mouvement supplémentaire est un mouvement de descente.
